# EUROPÄISCHE PATENTSCHRIFT

(11) **EP 3 105 038 B1**
(45) Veröffentlichungstag und Bekanntmachung des Hinweises auf die Patenterteilung: **23.05.2018**
(21) Anmeldenummer: 15700310.4
(22) Anmeldetag: 14.01.2015
(51) Int. Cl.: B29C 51/08, B21D 22/20, B29C 51/14, B32B 38/12

(54) **VERFAHREN ZUR HERSTELLUNG EINES VERBUNDBAUTEILS**
METHOD FOR PRODUCING A COMPOSITE PART
PROCÉDÉ DE FABRICATION D'UN ÉLÉMENT COMPOSITE

(30) Priorität: 10.02.2014 DE 102014202357
(43) Veröffentlichungstag der Anmeldung: 21.12.2016
(73) Patentinhaber: Bayerische Motoren Werke Aktiengesellschaft, 80809 München (DE)
(72) Erfinder: CONZE, Michael, 85416 Langenbach (DE); HAMMER, Maik, 84079 Bruckberg (DE)
(86) Internationale Anmeldenummer: PCT/EP2015/050589
(87) Internationale Veröffentlichungsnummer: WO 2015/117799

(56) Entgegenhaltungen:
- EP-A1- 2 529 916
- EP-A2- 1 284 182
- WO-A1-99/16657
- DE-A1- 3 641 127
- DE-A1- 10 105 591
- DE-A1- 10 350 787
- DE-A1-102006 006 333
- US-A- 3 917 770
- US-A1- 2009 321 002
- US-A1- 2011 108 667

## Beschreibung

Die Erfindung betrifft ein Verfahren zur Herstellung eines insbesondere flächigen Verbundbauteils mit einem Schaumkern, der auf einer ersten und einer zweiten Oberfläche eine stoffschlüssig mit dem Schaumkern verbundene erste und zweite Deckschicht aufweist. Die Erfindung betrifft des Weiteren ein Verbundbauteil.

Im Automobilbereich werden häufig aus Gewichtsgründen Verbundbauteile verwendet, die einen Schaumkern aufweisen, der beidseitig mit einer Deckschicht verbunden ist. Durch den Schaumkern sind diese Bauteile sehr leicht. Durch die Wahl des Materials und der Dicke der Deckschichten weist das Verbundbauteil dennoch eine hohe Oberflächenhärte und eine hohe Stabilität auf.

Aus der US 2011/0108667 A1 ist ein Verfahren zur Herstellung eines Flugzeuginnenraum-Verbundbauteils bekannt, das einen Schaumstoffkern aufweist.

Die DE 10 2006 006 333 A1 zeigt ein Formteillaminat, das eine Schaumstoffschicht und ein textiles Flächenmaterial umfasst, die auf einen zuvor geformten Träger laminiert werden.

Die EP 2 529 916 A1 beschreibt ein Verfahren zur Herstellung eines kaschierten Formteils, bei dem das Unter- und das Oberwerkzeug unterschiedliche Temperaturen aufweisen.

Aus der DE 101 05 591 A1 geht hervor, dass beim Umformen eines Verbundbauteils eine andere Temperatur vorgesehen sein soll als beim stoffschlüssigen Verbinden.

Aufgabe der Erfindung ist es, ein Verfahren zur Herstellung eines solchen Verbundbauteils bereitzustellen, das eine einfachere und schnellere Herstellung der Verbundbauteile ermöglicht. Aufgabe der Erfindung ist es des Weiteren, ein solches Verbundbauteil bereitzustellen, das einfacher zu lackieren ist.

Zur Lösung der Aufgabe ist ein Verfahren zur Herstellung eines insbesondere flächigen Verbundbauteils mit einem Schaumkern vorgesehen, der auf einer ersten und einer zweiten Oberfläche eine stoffschlüssig mit dem Schaumkern verbundene erste bzw. zweite Deckschicht aufweist, wobei die erste Deckschicht aus einem Metall besteht und die zweite Deckschicht aus einem faserverstärkten Kunststoff, wobei das Verfahren die folgenden Schritte aufweist:
a) Erwärmen der Deckschichten und des Schaumkerns,
b) Positionieren der Deckschichten auf den Oberflächen des Schaumkerns,
c) Positionieren des Schaumkerns und der Deckschichten in einer Presse oder einer Form, die das fertige Verbundbauteil abbildet,
d) Umformen des Schaumkerns und der Deckschichten in der Presse, wobei die Deckschichten auf den Oberflächen des Schaumkerns verschoben werden können,
e) Abkühlen und stoffschlüssiges Verbinden der Deckschichten mit dem Schaumkern in der Presse,
f) Entnehmen des Bauteils aus der Presse.

Bei dem erfindungsgemäßen Verfahren werden die Deckschichten auf eine Temperatur von 240°C bis 380°C und der Schaumkern auf eine Temperatur von 160°C bis 200°C erwärmt. Das erfindungsgemäße Verfahren bietet den Vorteil einer schnellen und zuverlässigen Herstellung solcher Verbundbauteile. Insbesondere können die Deckschichten während des Formprozesses zum Schaumkern verschoben werden. Eine gegenseitige Fixierung der Deckschichten und des Schaumkerns erfolgt nicht. Da sich die Bauteile während des Formgebungsvorgangs gegenseitig verschieben können, wird das Auftreten von Spannungen in oder zwischen den Deckschichten und dem Schaumkern während des Abkühlens oder des stoffschlüssigen Verbindens der Bauteile zuverlässig verhindert. Das Erwärmen der Deckschichten und des Schaumkerns kann beispielsweise in der Form erfolgen. Es ist aber auch denkbar, dass dies bereits vor dem Einlegen des Schaumkerns und der Deckschichten in die Form erfolgt, so dass die Belegungszeit der Form oder der Presse reduziert wird und ein kurzer Herstellungstakt realisierbar ist. Durch den gleichmäßigen Druck in der Form ist zudem sichergestellt, dass sich die Deckschichten und der Schaumkern flächig miteinander verbinden. Um die Bauteile stoffschlüssig miteinander zu verbinden, ist es erforderlich, dass die Oberfläche der Deckschichten und/oder die Oberfläche des Schaumkerns so weit erwärmt werden, dass diese aufweicht, sich aber nicht verflüssigt, um sich beim Abkühlen mit dem jeweils anderen Bauteil stoffschlüssig zu verbinden. Insbesondere darf die Temperatur nicht so weit erhöht werden, dass der Schaumkern aufgrund der hohen Temperaturen beschädigt wird, insbesondere zusammenfällt.

Das Umformen erfolgt vorzugsweise in einem Zeitfenster von 3 bis 45 Sekunden. In diesem Zeitfenster ist ein gleichmäßiges Umformen der Deckschichten und des Schaumkerns ohne eine Beschädigung der Deckschichten und des Schaumkerns möglich. Die Temperaturen werden vorzugsweise so gewählt, dass eine bessere Verformbarkeit der Bauteile möglich ist, diese aber nicht durch eine zu hohe Temperatur beschädigt werden. Des Weiteren ist die Zeitspanne so kurz gewählt, dass ein freizeitiges Abkühlen der Bauteile, das ein Verbinden der Bauteile vor dem Erreichen der endgültigen Position in der Form zu Folge hätte, ausgeschlossen werden kann.

Das Erwärmen der Deckschichten und des Schaumkerns erfolgt beispielsweise in einem Zeitfenster von 30 Sekunden bis zu 5 Minuten, wobei dieses Zeitfenster von der Dicke der Deckschichten bzw. des Schaumkerns und der verwendeten Materialien abhängig ist. Abhängig von den verwendeten Materialien kann nur die Oberfläche erwärmt werden oder das gesamte Bauteil. Das Erwärmen kann bereits in der Form oder der Presse erfolgen. Es ist aber auch möglich, dass dies vor dem Einlegen der Bauteile in die Presse oder in die Form erfolgt. Das Erwärmen erfolgt beispielsweise für jede Deckschicht bzw. den Schaumkern separat, insbesondere wenn diese verschiedene Dicken aufweisen oder diese für die Umformung auf verschiedene Temperaturen erhitzt werden müssen.

Das Abkühlen und stoffschlüssige Verbinden der Deckschichten und des Schaumkerns erfolgt vorzugsweise in einem Zeitfenster von 60 bis 300 Sekunden. Vorzugsweise erfolgt das Abkühlen so langsam, dass auftretende Spannungen zwischen den Deckschichten und dem Schaumkern abgebaut werden können.

Der Temperaturunterschied wird beispielsweise über einen kurzfristigen Temperaturboost am Ende der Heizphase erzeugt.

Der Druck, mit dem die Bauteile in der Presse oder der Form aufeinandergedrückt werden, ist ebenfalls von den verwendeten Materialien abhängig. Einerseits muss der Druck ausreichend hoch sein, um die Deckschichten und den Schaumkern zu verformen. Andererseits würde ein zu hoher Druck zu einem Zusammendrücken des im Verhältnis zu den Deckschichten druckempfindlichen Schaumkerns führen. Das Verbundbauteil wird beispielsweise mit einem Druck von 0,03 N/cm² bis 1,5 N/cm² umgeformt.

Bei komplexeren Bauteilen ist es möglich, dass die Verfahrensschritte a) bis f) nach dem Entnehmen des Verbundbauteils aus der Presse wiederholt werden, wobei eine andere Presse oder eine andere Form verwendet wird. Dadurch ist es möglich, dass komplexe Teilbereiche des Verbundbauteils nach dem Herstellen einer Grundform in einem ersten Verfahrensdurchgang weiter umgeformt werden, wobei das Auftreten von Spannungen in oder zwischen den Bauteilen verhindert wird.

Das stoffschlüssige Verbinden der Deckschichten und des Schaumkerns kann beispielsweise durch ein Erweichen oder Anschmelzen der Oberflächen des Schaumkerns oder der Deckschichten erfolgen. Es ist aber auch möglich, dass zwischen zumindest einer Deckschicht und dem Schaumkern eine Folie oder eine Klebeschicht angeordnet wird, die beim Erwärmen aufweicht und beim anschließenden Abkühlen eine stoffschlüssige Verbindung zwischen den Deckschichten und dem Schaumkern herstellt. Beispielsweise kann dazu eine thermoplastische Klebefolie verwendet werden.

Die Deckschichten können vor dem Erwärmen vorbehandelt werden, insbesondere durch Beschichten oder eine Korrosionsschutzmaßnahme, sodass ein Verbundbauteil mit einer Oberfläche entsteht, die vor Korrosion oder anderen Einflüssen geschützt ist.

Des Weiteren ist es möglich, dass der Schaumkern zumindest lokal verpresst und in der Dicke komprimiert wird.

Das Positionieren der Deckschichten auf den Oberflächen des Schaumkerns erfolgt vorzugsweise vor dem Erwärmen der Deckschichten und des Schaumkerns.

Zur Lösung der Aufgabe ist des Weiteren ein Verbundbauteil mit einem Schaumkern vorgesehen, der auf einer ersten und einer zweiten Oberfläche eine stoffschlüssig mit dem Schaumkern verbundene erste bzw. zweite Deckschicht aufweist, wobei das Verbundbauteil mit einem erfindungsgemäßen Verfahren hergestellt ist.

Eine erste Deckschicht kann eine Dicke von 0,2 mm bis 0,4 mm aufweisen. Bisher bekannte Verbundbauteile mit Deckschichten aus faserverstärktem Kunststoff weisen den Nachteil auf, dass sich diese schlecht lackieren lassen, so dass die möglichen Verwendungszwecke eingeschränkt sind. Eine Deckschicht aus Metall lässt sich einfach lackieren, sodass eine einfache Farbgebung des Verbundbauteils möglich ist, wodurch sich weitere Einsatzmöglichkeiten für das Verbundbauteil ergeben. Zudem entsteht durch das Metall ein Verbundbauteil mit einer sehr stabilen Oberfläche, das aber aufgrund des Schaumkerns dennoch sehr leicht ist.

Beispielsweise besteht die erste Deckschicht aus Aluminium.

Die zweite Deckschicht hat beispielsweise eine Dicke von 0,2 mm bis 1,0 mm.

Der Schaumkern weist beispielsweise eine Dicke von bis zu 10 mm auf, wobei die Dicke des Schaumkerns an die Dimensionen des gewünschten Bauteils angepasst werden kann.

Weitere Vorteile und Merkmale ergeben sich aus der nachfolgenden Beschreibung in Verbindung mit den beigefügten Zeichnungen. In diesen zeigen:
- Figur 1 einen Querschnitt durch ein erfindungsgemäßes Verbundbauteil,
- Figur 2 eine schematische Darstellung des Materialaufbaus des Verbundbauteils aus Figur 1, und
- die Figuren 3a bis 3d Verfahrensschritte eines erfindungsgemäßen Verfahrens zur Herstellung des Verbundbauteils aus Figur 1.

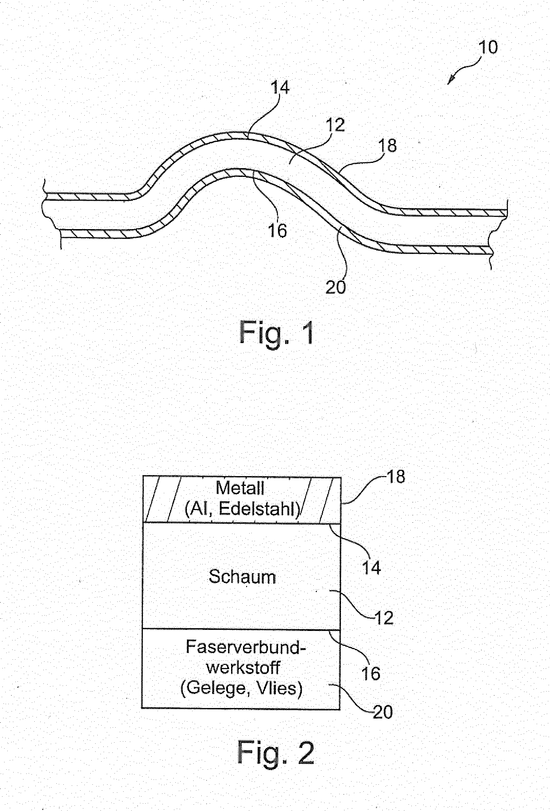

In den Figuren 1 und 2 ist ein Verbundbauteil 10 gezeigt, das einen Schaumkern 12 mit einer ersten Oberfläche 14 sowie einer zweiten Oberfläche 16 aufweist. Auf der ersten Oberfläche 14 ist eine erste Deckschicht 18 aufgebracht, die aus Metall, insbesondere Aluminium - besteht. Auf der zweiten, gegenüberliegenden Oberfläche 16 ist eine zweite Deckschicht 20 aufgebracht, die in der hier gezeigten Ausführungsform aus einem faserverstärkten Kunststoff besteht.

Der Schaumkern 12 hat eine Dicke von ca. 10 mm, wobei die Dicke des Schaumkerns 12 an den jeweiligen Einsatzzweck angepasst werden kann und auch dünner gewählt werden kann. Insbesondere kann der Schaumkern 12 auch unterschiedliche Dicken aufweisen. Die erste Deckschicht weist eine Dicke von 0,2 bis 0,4 mm auf, die zweite Deckschicht eine Dicke zwischen 0,2 mm und 1 mm.

Die erste Deckschicht 18 bildet beispielsweise die Außenhaut des Verbundbauteils 10. Die Metalloberfläche ist einfacher zu lackieren als ein Kunststoffbauteil, so dass eine einfachere Farbgebung des Verbundbauteils 10 möglich ist. Durch den Schaumkern 12 sowie die faserverstärkte zweite Deckschicht 20 ist das Verbundbauteil sehr leicht und weist trotzdem eine sehr hohe Festigkeit auf.

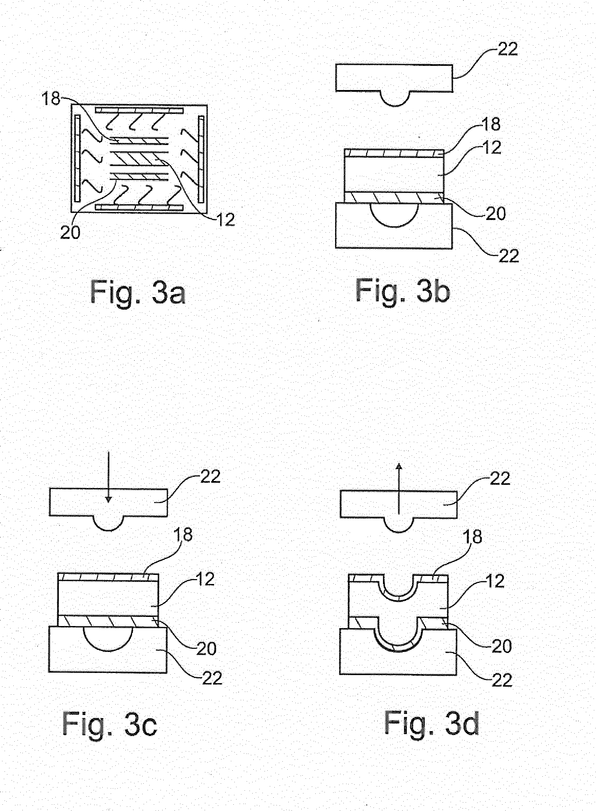

Ein Verfahren zur Herstellung eines solchen Verbundbauteils 10 ist in den Figuren 3a bis 3d dargestellt.

In einem ersten Verfahrensschritt (Figur 3a) werden die Deckschichten 18, 20 sowie der Schaumkern 12 erhitzt. Das Erwärmen erfolgt bis zu einer Temperatur, bei der sich die Oberflächen 14, 16 des Schaumkerns 12 oder die Oberflächen der Deckschichten 18, 20 erweichen, wobei die Temperatur so gewählt wird, dass ein Verflüssigen der Deckschichten 18, 20 bzw. des Schaumkerns 12 verhindert wird. Insbesondere ist auszuschließen, dass die Temperatur so weit ansteigt, dass der Schaumkern 12 zusammenfällt.

Das Erwärmen der Deckschichten 18, 20 und des Schaumkerns 12 kann in einem separaten Öfen erfolgen. Es ist aber auch möglich, dass dies bereits in der Form 22 (siehe Figur 3b) erfolgt. Das Erwärmen in einem separaten Ofen bietet den Vorteil, dass die Belegungszeit der Form 22 reduziert wird und ein schneller Produktionszyklus möglich ist.

Nach dem Erwärmen werden die Deckschichten 18, 20 auf die Oberflächen 14, 16 des Schaumkerns 12 aufgelegt und der Schaumkern 12 mit den aufgelegten Deckschichten 18, 20 in die Form 22 eingelegt.

Anschließend werden der Schaumkern und die Deckschichten 18, 20 durch Schließen der Form 22 zusammengepresst, wobei die Form 22 die Gestalt des fertigen Verbundbauteils 10 abbildet. Da die Deckschichten 18, 20 und der Schaumkern 12 noch nicht miteinander verbunden sind, können die Deckschichten 18, 20 gegen den Schaumkern 12 verschoben werden. Beim Verformen der Deckschichten 18, 20 und des Schaumkerns 12 können so keine Spannungen zwischen den einzelnen Lagen auftreten.

Der Druck, mit dem die Deckschichten 18, 20 und der Schaumkern 12 verformt werden, ist abhängig von den verwendeten Materialien. Einerseits muss der Druck ausreichend hoch sein, um die Bauteile, insbesondere die erste Deckschicht 18 aus Metall, verformen zu können. Andererseits darf es durch einen zu hohen Druck nicht zu einem Zusammenpressen des Schaumkerns 12 oder zu einer Beschädigung der Deckschichten 18, 20 kommen.

Anschließend wird das Verbundbauteil 10 in der Form 22 abgekühlt, wobei es zu einem stoffschlüssigen Verbund zwischen den Deckschichten 18, 20 und dem Schaumkern 12, also zu einem Verkleben der einzelnen Lagen miteinander kommt. Anschließend kann das fertige Verbundbauteil 10 aus der Form 22 entnommen werden (Figur 3d).

Das Zeitfenster, in dem die Deckschichten 18, 20 und der Schaumkern 12 abgekühlt werden und sich stoffschlüssig verbinden, ist abhängig von den verwendeten Materialien und der Dicke des Schaumkerns 12 bzw. der Deckschichten 18, 20. Vorzugsweise beträgt dieses Zeitfenster 60 bis 300 Sekunden.

Ist eine komplexere Gestalt des Verbundbauteils 10 gewünscht, kann dieses nach Abschluss des Verfahrens erneut erwärmt werden und in eine weitere Form 22 oder Presse mit einer komplexeren Formgebung eingelegt werden. In dieser Form 22 kann eine weitere Umformung und anschließende Abkühlung des Verbundbauteils 10 erfolgen. Da das Verbundbauteil 10 vor dem Umformen erwärmt wurde, können die Deckschichten 18, 20 auch bei erneuter Durchführung des Verfahrens gegen den Schaumkern 12 verschoben werden, sodass es auch bei diesem zweiten Umformprozess nicht zu Spannungen zwischen den Deckschichten 18, 20 und dem Schaumkern 12 kommen kann.

Zwischen den Deckschichten 18, 20 und dem Schaumkern 12 können auch zusätzliche Schichten vorgesehen sein, durch die eine stoffschlüssige Verbindung der Deckschichten 18, 20 und des Schaumkerns 12 erfolgt. Diese Schichten können beispielsweise einen geringeren Schmelzpunkt aufweisen, sodass eine geringere Temperatur zum Umformen und stoffschlüssigen Verbinden der Lagen des Verbundbauteils 10 ausreichend ist. Beispielsweise kann eine thermoplastische Klebefolie verwendet werden.

Die Deckschichten können vor dem Verbinden mit dem Schaumkern 12 des Weiteren vorbehandelt werden, beispielsweise mit einem Korrosionsschutz, sodass das fertige Verbundbauteil 10 eine bessere Widerstandsfähigkeit gegen äußere Einflüsse aufweist.

## Patentansprüche

1. Verfahren zur Herstellung eines insbesondere flächigen Verbundbauteils (10) mit einem Schaumkern (12), der auf einer ersten Oberfläche (14) und einer zweiten Oberfläche (16) eine stoffschlüssig mit dem Schaumkern (12) verbundene erste Deckschicht (18) bzw. eine zweite Deckschicht (20) aufweist, wobei die erste Deckschicht (18) aus einem Metall besteht und die zweite Deckschicht (20) aus einem faserverstärkten Kunststoff, mit folgenden Schritten:
a) Erwärmen der Deckschichten (18, 20) und des Schaumkerns (12),
b) Positionieren der Deckschichten (18, 20) auf den Oberflächen (14, 16) des Schaumkerns (12),
c) Positionieren des Schaumkerns (12) und der Deckschichten (18, 20) in einer Presse oder einer Form (22), die das fertige Verbundbauteil (10) abbildet,
d) Umformen des Schaumkerns (12) und der Deckschichten (18, 20) in der Presse oder der Form (22), wobei die Deckschichten (18, 20) auf den Oberflächen (14, 16) des Schaumkerns (12) verschoben werden können,
e) Abkühlen und stoffschlüssiges Verbinden des Schaumkerns (12) und der Deckschichten (18, 20) in der Presse oder der Form (22),
f) Entnehmen des Verbundbauteils (10) aus der Presse oder der Form (22), **dadurch gekennzeichnet, dass**
die Deckschichten (18,20) auf eine Temperatur von 240°C bis 380°C und der Schaumkern (12) auf eine Temperatur von 160°C bis 200°C erwärmt werden.

2. Verfahren nach Anspruch 1, **dadurch gekennzeichnet, dass** das Umformen in einem Zeitfenster von 3 bis 45 Sekunden erfolgt.

3. Verfahren nach Anspruch 1 oder 2, **dadurch gekennzeichnet, dass** das Erwärmen in einem Zeitfenster von 30 Sekunden bis 5 Minuten erfolgt.

4. Verfahren nach einem der vorhergehenden Ansprüche, **dadurch gekennzeichnet, dass** das Abkühlen und stoffschlüssige Verbinden in einem Zeitfenster von 60 bis 300 Sekunden erfolgt.

5. Verfahren nach Anspruch 1, **dadurch gekennzeichnet**, das der Temperaturunterschied zwischen den Deckschichten (18, 20) und dem Schaumkern (12) durch einen kurzen Temperaturboost am Ende der Heizphase erzeugt wird.

6. Verfahren nach einem der vorhergehenden Ansprüche, **dadurch gekennzeichnet, dass** die Presse oder die Form (22) das Verbundbauteil (10) mit einem Druck von 0,03 N/cm² bis 1,5 N/cm² umformt.

7. Verfahren nach einem der vorhergehenden Ansprüche, **dadurch gekennzeichnet, dass** die Verfahrensschritte a) bis f) nach dem Entnehmen aus der Presse oder der Form (22) wiederholt werden, wobei eine andere Presse oder Form (22) verwendet wird.

8. Verfahren nach einem der vorhergehenden Ansprüche, **dadurch gekennzeichnet, dass** zwischen zumindest einer Deckschicht (18, 20) und dem Schaumkern (12) eine Folie oder eine Klebeschicht angeordnet wird.

9. Verfahren nach einem der vorhergehenden Ansprüche, **dadurch gekennzeichnet, dass** zumindest eine Deckschicht (18, 20) vorbehandelt wird, insbesondere durch Beschichten oder eine Korrosionsschutzmaßnahme.

10. Verfahren nach einem der vorhergehenden Ansprüche, **dadurch gekennzeichnet, dass** zumindest lokal der Schaumkern (12) verpresst und in der Dicke komprimiert wird.

11. Verfahren nach einem der vorhergehenden Ansprüche, **dadurch gekennzeichnet, dass** das Positionieren der Deckschichten (18, 20) auf den Oberflächen (14, 16) des Schaumkerns (12) vor dem Erwärmen der Deckschichten (18, 20) und des Schaumkerns (12) erfolgt.

## Claims

1. A method for producing an in particular flat composite component (10) with a foam core (12) which has on a first surface (14) and a second surface (16) a first cover layer (18) which is connected to the foam core (12) by a material-formed bond or a second cover layer (20) respectively, wherein the first cover layer (18) consists of a metal and the second cover layer (20) of a fibre-reinforced plastics material, having the following steps:
a) heating the cover layers (18, 20) and the.foam core (12),
b) positioning the cover layers (18, 20) on the surfaces (14, 16) of the foam core (12),
c) positioning the foam core (12) and the cover layers (18, 20) in a press or a mould (22) which forms the finished composite component (10),
d) shaping the foam core (12) and the cover layers (18, 20) in the press or the mould (22), wherein the cover layers (18, 20) can be displaced on the surfaces (14, 16) of the foam core (12),
e) cooling and connection by a material-formed bond of the foam core (12) and the cover layers (18, 20) in the press or the mould (22),
f) removing the composite component (10) from the press or the mould (22), **characterised in that**
the cover layers (18, 20) are heated to a temperature of 240°C to 380°C and the foam core (12) is heated to a temperature of 160°C to 200°C.

2. A method according to Claim 1, **characterised in that** the shaping takes place within a time window of 3 to 45 seconds.

3. A method according to Claim 1 or Claim 2, **characterised in that** the heating takes place within a time window of 30 seconds to 5 minutes.

4. A method according to one of the preceding claims, **characterised in that** the cooling and connection by a material-formed bond takes place within a time window of 60 to 300 seconds.

5. A method according to Claim 1, **characterised in that** the temperature difference between the cover layers (18, 20) and the foam core (12) is produced by a short temperature boost at the end of the heating phase.

6. A method according to one of the preceding claims, **characterised in that** the press or the mould (22) shapes the composite component (10) at a pressure of 0.03 N/cm² to 1.5 N/cm².

7. A method according to one of the preceding claims, **characterised in that** method steps a) to f) are repeated after removal from the press or the mould (22), with a different press or mould (22) being used.

8. A method according to one of the preceding claims, **characterised in that** a film or an adhesive layer is arranged between at least one cover layer (18, 20) and the foam core (12).

9. A method according to one of the preceding claims, **characterised in that** at least one cover layer (18, 20) is pre-treated, especially by coating or an anti-corrosion measure.

10. A method according to one of the preceding claims, **characterised in that** the foam core (12) is pressed and compressed in thickness at least locally.

11. A method according to one of the preceding claims, **characterised in that** the positioning of the cover layers (18, 20) on the surfaces (14, 16) of the foam core (12) takes place prior to the heating of the cover layers (18, 20) and of the foam core (12).

## Revendications

1. Procédé de fabrication d'un élément composite plat (10) muni d'un noyau en mousse (12) et ayant sur sa première surface (14) et sur sa seconde surface (16), une première couche de couverture (18) ou une seconde couche de couverture (20) reliées par une liaison de matière au noyau en mousse (12), la première couche de couverture (18) étant en métal et la seconde couche de couverture (20) en une matière plastique renforcée de fibres,
procédé comprenant les étapes suivantes consistant à :
a) chauffer les couches de couverture (18, 20) et le noyau de mousse (12),
b) positionner les couches de couverture (18, 20) sur les surfaces (14, 16) du noyau de mousse (12),
c) positionner le noyau de mousse (12) et les couches de couverture (18, 20) dans une presse ou un moule (22) qui a la forme de la pièce terminée (10),
d) transformer le noyau de mousse (12) et les couches de couverture (18, 20) dans la presse ou le moule (22), les couches de couverture (18, 20) pouvant être déplacées sur la surface (14, 16) du noyau de mousse (12),
e) refroidir et relier par une liaison par la matière le noyau de mousse (12) et les couches de couverture (18, 20) dans la presse ou le moule (22),
f) enlever la pièce composite (10) de la presse ou du moule (22), procédé **caractérisé en ce qu'**
on chauffe les couches de couverture (18, 20) à une température comprise entre 240°C et 380°C et le noyau de mousse (12) à une température comprise entre 160°C et 200°C.

2. Procédé selon la revendication 1,
**caractérisé en ce que**
la transformation se fait dans une fenêtre de temps comprise entre 3 et 45 secondes.

3. Procédé selon la revendication 1 ou 2,
**caractérisé en ce que**
le chauffage se fait dans une fenêtre de temps comprise entre 30 secondes et 5 minutes.

4. Procédé selon l'une des revendications précédentes,
**caractérisé en ce que**
le refroidissement et la liaison par la matière se font dans une fenêtre de temps comprise entre 60 et 300 secondes.

5. Procédé selon la revendication 1,
**caractérisé en ce que**
la différence de température entre les couches de couverture (18, 20) et le noyau de mousse (12) s'obtient par une brève élévation de température à la fin de la phase de chauffage.

6. Procédé selon l'une des revendications précédentes,
**caractérisé en ce que**
la presse ou le moule (22) transforme la pièce composite (10) sous une pression de 0,03 N/cm² jusqu'à 1,5 N/cm².

7. Procédé selon l'une des revendications précédentes,
**caractérisé en ce qu'**
on répète les étapes a) - f) du procédé après l'extraction de la presse ou du moule (22) et on utilise une autre presse ou un autre moule (22).

8. Procédé selon l'une des revendications précédentes,
**caractérisé en ce qu'**
on met un film ou une couche adhésive entre au moins une couche de couverture (18, 20) et le noyau de mousse (12).

9. Procédé selon l'une des revendications précédentes,
**caractérisé en ce qu'**
on effectue un traitement préalable d'au moins une couche de couverture (18, 20), en particulier par revêtement ou en prenant une mesure anticorrosion.

10. Procédé selon l'une des revendications précédentes,
**caractérisé en ce qu'**
on comprime au moins localement le noyau de mousse (12) et on le comprime en épaisseur.

11. Procédé selon l'une des revendications précédentes,
**caractérisé en ce que**
le positionnement des couches de couverture (18, 20) se fait sur les surfaces (14, 16) du noyau de mousse (12) avant le chauffage des couches de couverture (18, 20) et du noyau de mousse (12).
